# EUROPÄISCHE PATENTSCHRIFT

(11) **EP 0 621 299 B1**
(45) Veröffentlichungstag und Bekanntmachung des Hinweises auf die Patenterteilung: **09.07.1997**
(21) Anmeldenummer: 94105423.1
(22) Anmeldetag: 08.04.1994
(51) Int. Cl.: C08G 73/10, C09D 179/08

(54) **Lösungen polyimidbildender Substanzen und deren Verwendung als Beschichtungsmittel**
Solutions of polyimide-forming substances and their use as coating material
Solutions de précurseur de polyimides et leur utilisation comme moyen de revêtement

(30) Priorität: 23.04.1993 DE 4313246
(43) Veröffentlichungstag der Anmeldung: 26.10.1994
(73) Patentinhaber: BASF Lacke + Farben AG, 48165 Münster-Hiltrup (DE)
(72) Erfinder: Blum, Rainer, D-67069 Ludwigshafen (DE); Hoffmann, Gerhard, Dr., D-67166 Otterstadt (DE)
(74) Vertreter: Karau, Wolfgang, Dr.

(56) Entgegenhaltungen:
- EP-A- 0 048 080
- US-A- 4 960 824
- US-A- 5 004 627
- PATENT ABSTRACTS OF JAPAN vol. 13, no. 339 (C-624)(3687) 31. Juli 1989 & JP-A-01 117 878 (UBE IND LTD)
- PATENT ABSTRACTS OF JAPAN vol. 13, no. 339 (C-624)(3687) 31. Juli 1989 & JP-A-01 117 878

## Beschreibung

Die vorliegende Erfindung betrifft Lösungen von polyimidbildenden Substanzen, enthaltend
A) aromatische oder teilaromatische Diamine und
B) Tetraester von imidbildenden aromatischen oder teilaromatischen Tetracarbonsäuren oder Gemischen dieser Tetraester mit den entsprechenden Tri-, Di- und/oder Monoestern, wobei die Gemische aus Tetra- und Diestern bis zu 80 mol-% Diester enthalten können.

Weiterhin betrifft die Erfindung die Verwendung solcher Lösungen zur Herstellung von Überzügen und unter Verwendung solcher Lösungen erhältliche beschichtete Gegenstäude.

Polyimide werden in zunehmendem Maße zur Beschichtung von Metalldrähten, Glas- und Quarzfasern sowie Substraten aus Silicum (Silicium-Wafer) eingesetzt. Insbesondere finden sie Verwendung in der Elektronik und Mikroelektronik z. B. als Zwischen- oder Deckschichten beim Aufbau von Schaltungen.

Die Substrate werden dabei im allgemeinen mit Lösungen von Polyimiden oder Polyamidsäuren beschichtet, wobei im Falle der Polyamidsäure die Imidisierung dann auf der Substratoberfläche erfolgt.

Die Lösungen von Polyimiden und Polyamidsäuren müssen jedoch relativ niedrigkonzentriert sein, damit sich eine für die Verarbeitung ausreichend geringe Viskosität einstellt. Typische Handelsprodukte haben in der Regel nur 12 bis 20 Gew.-% Feststoffgehalt.

Aus der niedrigen Konzentration ergibt sich ein hoher Schrumpf bei der Trocknung. Dieser Schrumpf führt zu einer mehr oder weniger starken Abformung der unter der Polyimid-Schicht liegenden Struktur in die Polyimid-Oberfläche.

Vor allem bei z. B. für Schaltungen notwendigem mehrlagigen Beschichtungen ergeben sich Ungenauigkeiten im Aufbau.

Aus diesem Grunde sowie zur Vermeidung von zu großen Lösungsmittelmengen sind höher konzentrierte Lösungen erwünscht. Höhere Konzentrationen sind prinzipiell möglich mit Lösungen, welche lediglich die Ausgangsstoffe für die Polyimide enthalten. Da Lösungen von Tetracarbonsäuredianhydriden und Diaminen jedoch nicht lagerstabil sind, sondern zu Polyamidsäure polymerisieren, werden bisher statt der Tetracarbonsäuredianhydride Tetracarbonsäurediester eingesetzt.

In der US-A-3 700 649 werden Lösungen von Benzophenontetracarbonsäurediestern und Diaminen mit einer sehr geringen Basizität zur Herstellung von Polyimidbeschichtungen beschrieben. Als Alkohole für die Veresterung werden Alkanole und Benzylalkohol genannt.

Bei den aus der US-A-3 347 808 bekannten Lösungen aus Tetracarbonsäurediestern und Diaminen werden Alkanole als Veresterungskomponente eingesetzt.

Die US-A-4 874 835, betrifft Lösungen von Diaminen und Diestern von Oxydiphthalsäure mit Alkanolen.

Aus der US-A-4 960 824, sind Lösungen von Diestern araliphatischer Tetracarbonsäuren mit Alkanolen und mindestens einem Diamin ausgewählt aus m-Phenylendiamin, p-Phenylendiamin oder 4-Aminophenylether bekannt.

In den deutschen Patentanmeldungen P 41 35 056.1 und P 41 35 058.8 werden Lösungen von polyimidbildenden Ausgangsstoffen wie Diamine und Tetracarbonsäurediestern und deren Verwendung für Überzüge beschrieben.

Nach dem Stand der Technik wird der Einsatz von anderen Estern als den Diestern als nicht hilfreich angesehen. Nachteilig am Einsatz reiner Diester ist jedoch noch ein Anstieg der Viskosität bei längerer Lagerung, vermutlich durch die Ausbildung polymerer Salze. Weiterhin nachteilig ist die Ausbildung von Blasen bei der Herstellung dickerer Schichten ab ca. 30 µm Dicke. Solche dicken Schichten werden aber für Pufferschichten bei der Chipherstellung dringend benötigt.

Aufgabe der vorliegenden Erfindung war es, verbesserte Lösungen von polyimidbildenden Substanzen zu finden.

Demgemäß wurden die eingangs definierten Lösungen sowie deren Verwendung zur Herstellung von Polyimidbeschichtungen gefunden.

Die erfindungsgemäßen Lösungen enthalten als Ausgangsstoffe für die Polyimide aromatische oder teilaromatische Diamine sowie Ester von aromatischen oder teilaromatischen Tetracarbonsäuren.

Als Diamine kommen aromatische oder teilaromatische Diamine, welche mindestens einen aromatischen Ring enthalten, in Betracht, insbesondere solche, bei denen die Aminogruppen an einen aromatischen Kern gebunden sind. Es kann sich dabei um Diamine mit einem aromatischen Ring, mit kondensierten aromatischen Ringsystemen oder aromatische Ringen, die z. B. durch eine Einfachbindung, eine Ether-, Carbonyl-, Sulfonylgruppe oder aliphatische Kohlenwasserstoffreste, insbesondere mit 1 bis 8 Kohlenstoffatomen und gegebenenfalls auch Heteroatomen wie Schwefel, Stickstoff oder Sauerstoff, verbunden sind, handeln. Die aromatischen Ringe bzw. Ringsysteme können als Substituenten insbesondere C₁- bis C₆-Alkyl- oder -Alkoxygruppen oder Halogenatome wie Chlor und Fluor tragen.

In Betracht kommen z. B.:
Benzidin, Dimethylbenzidin, Dimethoxybenzidin, Diethoxybenzidin, Diaminodiphenylsulfon, Diaminodiphenylpropan, Diaminodiphenylsulfid, 4,4'-Bis[2-(4-aminophenyl)propan]phenylen/Bisanilin P, 4,4'-Dimethyl-3,3'-diaminodiphenylsulfon, 4,4'-Dimethyl-3,3'-diaminodiphenylsulfid, p-Phenylendiamin, m-Phenylendiamin, toluylendiamin, Diaminomethoxybenzol, Xylylendiamin, Diaminocumen, Diaminonaphthalin, Diaminonaphthol, Diaminonaphthochinon, Diaminoanthracen, Diaminoanthrachinon, Diaminophenanthren, 9,10-Bis(4-aminophenyl)-anthracen, 3,5-Diethyl-2,4-diaminotoluol, 3,5-Diethyl-2,6-diaminotoluol, Diisopropylphenylendiamin, (2-methyl-6-isopropylanilin), 4,4'-Methylen-bis-(2-methyl-6-isopropylanilin), 2,6-Diisopropylanilin, 1,3-Diamino-4-methoxybenzol, Hexafluoro-2,2-bis(3-amino-4,5-dimethylphenyl)propan, 2,2-Bis(4,4'-aminophenyl)-propan, Bis(4,4'-aminophenyl)sulfon, Bis(4,4'-aminophenyl)sulfid, Bis(3,3'-aminophenyl)sulfon, Bis(3,3'-aminophenyl)sulfid, 2,2-Bis[4-(4-aminophenoxy)phenyl]propan, 2,2-Bis[4-(4-aminophenoxy)phenyl]hexafluorpropan, Bis[4-(4-aminophenoxy)phenyl]sulfon, Bis[4-(4-aminophenoxy)phenyl]sulfid, 2,2-Bis[4(3-aminophenoxy)phenyl]hexafluorpropan, Bis[4-(3-aminophenoxy)phenyl]sulfon, Bis-[4-(3-aminophenoxy)phenyl]sulfid, 4,4'-Bis(4-aminophenoxy)biphenyl, 4,4'-Bis(3-aminophenoxy)biphenyl, 1,4'-Bis(4-aminophenoxy)phenylen, 1,3'-Bis(4-aminophenoxy)phenylen, Diaminodiphenylmethan, diphenoxyphenylsulfon, Diaminodiphenoxyphenylsulfid, Diaminodiphenyloxid, Diaminopyridin, Bis-(4-aminophenyl)dialkylsilane, 3,3'-Dihydroxy-4,4'-diaminobiphenyl, 9,9'-Bis(4-amino)fluoren, o-Toluidinsulfon, Diaminobenzanilid, Acridindiamin und anthranilsäureamid.

Geeignet sind insbesondere auch Gemische von Diaminen.

Besonders bevorzugte Diamine sind Diaminodiphenylmethan, Diaminodiphenylsulfon, 4,4'-Diaminodiphenyloxid, 2,2-Bis[4-(4-aminophenoxy)-phenyl]propan, 2,2-Bis[4-(4-aminophenoxy)-phenyl]hexafluorpropan.

Komponenten B sind Tetraester von imidbildenden aromatischen oder teilaromatischen Tetracarbonsäuren oder Gemische dieser Tetraester mit den entsprechenden Tri-, Di- oder Monoestern.

Als Tetracarbonsäureester kommen insbesondere solche in Betracht, die sich von aromatischen oder teilaromatischen Tetracarbonsäuredianhydriden mit mindestens einem aromatischen Ring ableiten. Es kann sich dabei um Tetracarbonsäureester mit einem aromatischen Ring, mit kondensierten aromatischen Ringsystemen oder aromatischen Ringen, die z. B. durch eine Einfachbindung, eine Ether-, Carbonyl-, Sulfonylgruppe oder aliphatische Kohlenstoffreste, insbesondere mit 1 bis 8 Kohlenstoffatomen und gegebenenfalls auch Heteroatomen wie Sauerstoff, Schwefel oder Stickstoff verbunden sind, handeln. Die aromatischen Ringe bzw. Ringsysteme können als Substituenten insbesondere C₁ bis C₆-Alkyl- oder -Alkoxygruppen oder Halogenatome, wie Chlor und Fluor tragen.

Beispielsweise zu nennen sind folgende Tetracarbonsäuredianhydride, von denen sich die Tetracarbonsäureester ableiten:

2,3,9,10-Perylentetracarbonsäuredianhydrid, 1,4,5,8-Naphthalin-tetracarbonsäuredianhydrid, 2,6-Dichlornaphthalin-1,4,5,8-tetracarbonsäuredianhydrid, 2,7-Dichlornaphthalin-1,4,5,8-tetracarbonsäuredianhydrid, Phenanthren-1,8,9,10-tetracarbonsäuredianhydrid, Pyromellithsäuredianhydrid, 3,3',4,4'-Biphenyltetracarbonsäuredianhydrid, 2,2',3,3'-Biphenyltetracarbonsäuredianhydrid, 4,4'-Isopropylidendiphthalsäuredianhydrid, Hexafluoroisopropyliden-2,2-bisphthalsäureanhydrid, 4,4'-Oxydiphthalsäuredianhydrid, 4,4'-Sulfonyldi-thylendiphthalsäuredianhydrid, 4,4'-Thiodiphthalsäuredianhydrid 3,3'-Oxydiphthalsäuredianhydrid, 4,4'-Methylendiphthalsäuredianhydrid, 4,4,-Thiodiphthalsäuredianhydrid, 4,4'-Acetylidendiphthalsäuredianhydrid, 2,3,6,7-Naphthalintetracarbonsäuredianhydrid, 1,2,4,5-Naphthalintetracarbonsäuredianhydrid, 1,2,5,6-Naphthalintetracarbonsäuredianhydrid, Benzol1,2,3,4-tetracarbonsäuredianhydrid, Thiophen-2,3,4,5-tetracarbonsäuredianhydrid, 1-(3',4'-Dicarboxyphenyl)-1,3,3-trimethylindan-5,6-dicarbonsäuredianhydrid, 1-(3',4'-Dicarboxyphenyl)-1,3,3-trimethylindan-6,7-dicarbonsäuredianhydrid, 1-(3',4'-Dicarboxyphenyl)-3-methylindan-5,6-dicarbonsäuredianhydrid, 1-(3',4'-Dicarboxyphenyl)-3-methylindan-6,7-dicarbonsäuredianhydrid, 3,3',4,4'-Benzophenontetracarbonsäuredianhydrid, 4,5,3',4'-Benzophenontetracarbonsäuredianhydrid und 2,2'-Bis[4(3,4-dicarboxyphenoxy)phenyl]-propandianhydrid.

Geeignet sind insbesondere auch Gemische von Tetracarbonsäureestern. Gemische von Tetracarbonsäureestern, welche sich von diphthalsäuredianhydriden, Benzophenontetracarbonsäuredianhydriden, Biphenyltetracarbonsäuredianhydriden oder Hexafluoroisopropyliden-2,2-bisphthalsäuredianhydrid ableiten, haben sich als besonders vorteilhaft erwiesen.

Die Estergruppen der Tetracarbonsäureester leiten sich beispielsweise von C₁-C₂₀-Alkanolen wie Methanol, Ethanol, Propanol, Isopropanol, Butanol oder Isobutanol ab, ebenso wie von den entsprechenden höheren Homologen. Weiterhin kommen Cycloalkylester in Betracht, bevorzugt Cyclohexyl und Methylcylohexylester. Geeignete Alkoholkomponenten sind auch aromatische Alkohole wie Phenol, Cumol oder Kresol oder teilaromatische Alkohole, beispielsweise Benzylalkohol, 1-Hydroxy-2-phenyl-ethan, 1-Hydroxy-3-phenylethan oder Alkoxyphenylalkohole wie Phenoxyethyl-, Phenoxypropyl- oder Phenoxybutylalkohol ebenso wie phenoxyethylenglycol oder Monophenoxypropylenglycol.

Weiterhin kommen als Alkoholkomponenten N-Hydroxyalkylpyrrolidone in Betracht, beispielsweise N-Hydroxyethylpyrrolidon, N-Hydroxypropylpyrrolidon, oder auch N-Hydroxycycloalkylpyrrolidone, z.B. N-Hydroxycyclohexylpyrrolidon, sowie die Isomeren dieser Stoffe.

Des weiteren können in untergeordneten Mengen auch polyfunktionelle Alkohole eingesetzt werden.

Die Herstellung der Tetraester erfolgt durch Veresterung der Tetracarbonsäuredianhydride mit den oben genannten Alkoholen nach an sich bekannten Methoden. Dabei wird die Alkoholkomponente üblicherweise in 5 bis 20-fachem Überschuß eingesetzt. Die Veresterung wird bevorzugt bei Temperaturen von 80 bis 200°C durchgeführt. Bei diesen Temperaturen kann eine vollständige Veresterung erreicht werden. Die Reaktionszeiten betragen 1 bis 6 h. Gegebenenfalls können auch Veresterungskatalysatoren, z.B. Dimethylaminopyridin, oder p-Toluolsulfonsäure zugesetzt werden.

Eine Reihe der genannten Ester sind kommerziell erhältlich.

Neben Tetraestern, die nur eine Alkoholkomponente beinhalten, können auch Mischester eingesetzt werden, welche durch Umesterung erhalten werden können. So können vor allem Tetraester niederer Alkanole mit höhersiedenden Alkoholen umgeestert werden, beispielsweise Tetramethyl- oder Tetraethylester mit Phenoxyalkylalkoholen. Der Umesterungsgrad ist dabei nicht kritisch.

Als Komponente B kommen auch Mischungen von Tetraestern mit Diestern in Betracht, wobei sowohl symmetrische als auch unsymmetrische Diester eingesetzt werden können. Die Diester werden im allgemeinen bei niedrigeren Veresterungstemperaturen im Bereich von 50 bis 80°C erhalten.

Bei der Herstellung der Diester, die dem Fachmann bekannt ist, können geringe Mengen an Tri- oder Tetraestern entstehen. Monoester entstehen nur in untergeordneten Mengen.

Wenn nicht gereinigte Ester eingesetzt werden, sondern die entsprechenden Rohester, so können diese, wie dem Fachmann bekannt ist, Anteile der entsprechenden höheren oder niederen Ester enthalten.

Mischungen aus Tetra- und Diestern können bis zu 80 mol-% Diester enthalten, bevorzugt sind Mischungen aus 40 bis 60 mol-% Tetraestern und 40 bis 60 mol-% Diestern. Die Alkoholkomponente der Tetra- beziehungsweise Diester kann gleich oder verschieden sein.

Bevorzugt enthalten die erfindungsgemäßen Lösungen Tetraester oder Gemische aus Tetra- und Diestern.

Als Lösungsmittel für die Tetracarbonsäureester und Diamine eignen sich z. B. polare organische Lösungsmittel, wie aliphatische oder aromatische Alkohole, Ether, Ketone, Aldehyde oder Ester.

Bevorzugt werden hochpolare Lösungsmittel wie N-Methylpyrrolidon, Formamid, Dimethylformamid, Alkylalkylendiharnstoffe wie methylethylendiharnstoff oder Dimethylpropylendiharnstoff, Dimethylsulfoxid, Butyrolacton, Pyrrolidon, Dialkylacetamid aber auch Glykole, Glykolester und Glycolether verwendet.

Als Lösungsmittel empfiehlt sich naheliegenderweise auch der bei der Herstellung der Tetracarbonsäureester üblicherweise im Überschuß eingesetzte Alkohol.

Die Wahl des Lösungsmittels oder Lösungsmittelgemisches hängt im wesentlichen nur von der Löslichkeit, bzw. der Polarität der Tetracarbonsäureester und Diamine ab.

Gegebenenfalls können auch nichtpolare Lösungsmittel wie aliphatische oder aromatische Kohlenwasserstoffe in Lösungsmittelgemischen Mitverwendung finden.

Die erfindungsgemäßen Lösungen enthalten den Tetracarbonsäureester und das Diamin vorzugsweise im Molverhältnis von 1,5:1 bis 1:1,5, besonders bevorzugt ist das Molverhältnis von ca. 1:1.

Der Feststoffgehalt der Lösungen beträgt vorzugsweise 30 bis 60 Gew.-%.

Zur Herstellung der Lösungen können Tetracarbonsäureester, Diamin und Lösungsmittel in beliebiger Reihenfolge zusammengegeben werden. Zum Beispiel ist es möglich zunächst den Tetracarbonsäureester durch Umsetzung eines Tetracarbonsäuredianhydrids mit einem Überschuß an Alkohol herzustellen und zum erhaltenen Gemisch das Diamin und gegebenenfalls weiteres Lösungsmittel zu geben. Um alle Komponenten in Lösung zu bringen wird, falls erforderlich, bei Raumtemperatur oder auch erhöhter Temperatur, z. B. zwischen 30 und 120°C, insbesondere 40-80°C, gerührt.

Die erfindungsgemäßen Lösungen können übliche Zusatzstoffe, wie Katalysatoren für die Imidbildung, Farbstoffe, Pigmente, Füllstoffe, Verlaufsmittel und viskositätsregulierende Stoffe enthalten.

Sie eignen sich als Beschichtungsmittel zur Herstellung von Überzügen auf unterschiedlichsten Substraten, z. B. Metall, Glas oder Silicium. Die Härtung der Beschichtung erfolgt vorzugsweise bei Endtemperaturen zwischen 150° und 450°C, besonders bevorzugt zwischen 300 und 400°C. Es hat sich als besonders vorteilhaft erwiesen den Härtungsprozeß mehrstufig durch stufenweises Erhöhen der Temperatur bis zur Endtemperatur durchzuführen.

Mit den erfindungsgemäßen Lösungen können auch in großer Schichtdicke blasenfreie, planare Beschichtungen hergestellt werden.

### Abkürzungen

- NMP: N-Methylpyrrolidon
- MPG: Ethylenglykolmonophenylether
- DMAP: Dimethylaminopyridin
- PTS: p-Toluolsulfonsäure
- PMDA: Pyromellithsäuredianhydrid
- BPDA: Biphenyltetracarbonsäuredianhydrid
- BTS-TM: Benzophenontetracarbonsäuretetramethylester
- PMS: Pyromellithsäure
- PMS-TM: Pyromellithsäuretetramethylester

- BAPP: 2,2-Bis[4-(4-aminophenoxy)phenyl]propan

### Beispiel 1

Eine Mischung aus

| | | | |
|---|---|---|---|
| 114,10 g | NMP | | |
| 44,13 g | BPDA | (0,15 Mol) | |
| 0,50 g | DMAP | | |
| 69,10 g | MPG | (0,50 Mol) | 30 min bei 120°C rühren, auf 60°C abkühlen, dazu |
| 62,14 g | BTS-TM | (0,15 Mol) | und unter kräftigem Rühren |
| 123,15 g | BAPP | (0,30 Mol) | zufügen, 60 min bei 60°C weiterrühren und dann abkühlen lassen. |

### Beispiel 2

| | | | |
|---|---|---|---|
| 100,00 g | NMP | | und |
| 80,00 g | MPG | | vorlegen und unter Rühren darin |
| 00,50 g | DMAP | | lösen und |
| 93,08 g | PMS-TM | (0,30 Mol) | unter gutem Rühren bei 60°C, sowie |
| 123,15 g | BAPP | (0,30 Mol) | zugeben und 60 min bei 60°C weiterrühren, abkühlen. |

### Beispiel 3

| | | | |
|---|---|---|---|
| 250,00 g | NMP | | und |
| 280,00 G | MPG | | vorlegen und unter Rühren darin |
| 93,08 g | PMS-TM | (0,30 Mol) | lösen und nach Zugabe von |
| 00,50 g | PTS | | auf 130°C erwärmen und 1 Stunde dabei halten, dann unter Wasserstrahlvakuum bei 110 bis 125°C in eine tiefgekühlte Vorlage |
| 338,00 g | Destillat | | abdestillieren, auf 60°C abkühlen und unter gutem Rühren bei 60°C |
| 123,15 g | BAPP | (0,30 Mol) | zugeben und 60 min bei 60°C weiterrühren, abkühlen. |

Laut GC-Analyse enthält das Destillat 11,7 g Methanol, es hat sich also durch Umesterung ein Gemisch aus Methyl- und MPG-Estern der PMS gebildet.

### Beispiel 4 (Vergleichsbeispiel)

| | | | |
|---|---|---|---|
| 100,00 g | NMP | | vorlegen und unter Rühen darin |
| 65,45 g | PMDA | (0,30 Mol) | aufschlämmen, |
| 00,50 g | DMAP | | zugeben |
| 128,00 g | Methanol | (1,0 Mol) | zugeben 60 min bei 70°C rühren, |
| 123,15 g | BAPP | (0,30 Mol) | zugeben und 60 min bei 60°C weiterrühren, abkühlen. |

Es wird ein Überschuß von Methanol verwendet, der sicherstellen soll, daß weitgehend alle Anhydridgruppen umgesetzt werden.

### Prüfung/Vergleich der Beispiele

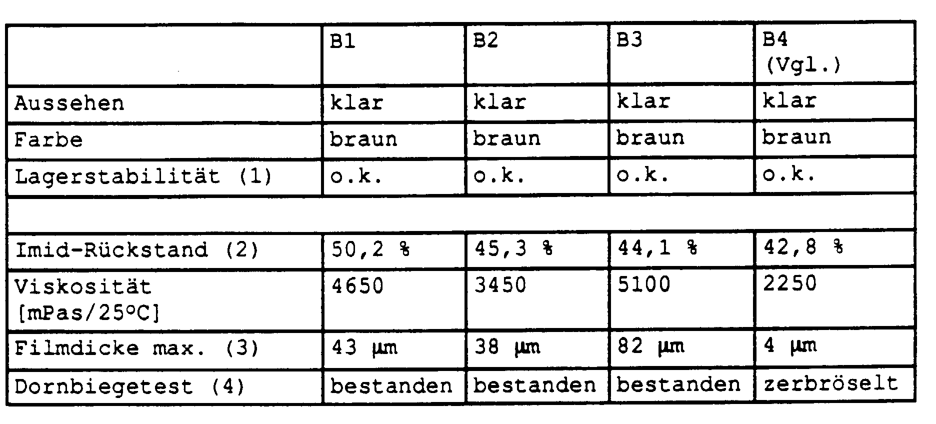

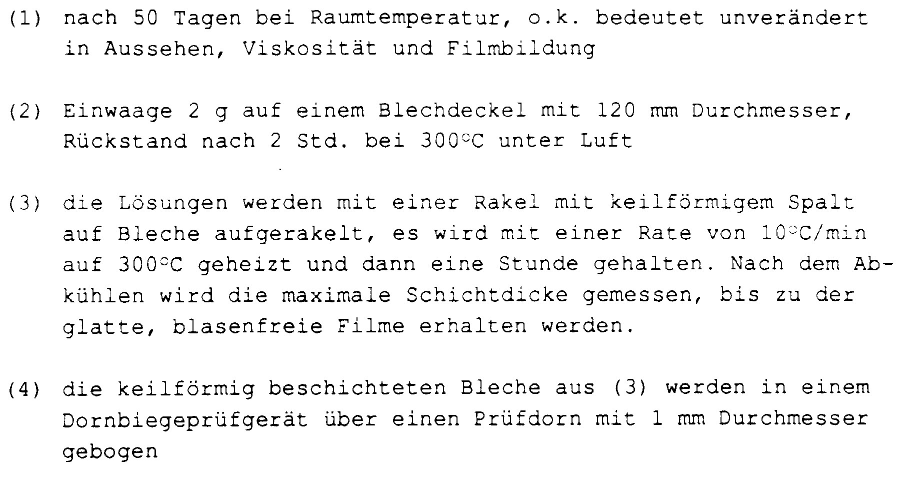

Die Beispiele B1, B2 und B3 zeigen den Fortschritt der erfindungsgemäßen Lösungen, die höher veresterte Tetracarbonsäuren enthalten, im Vergleich zu B4, das reine Diester enthält. Der Fortschritt liegt vor allem im Filmbildevermögen auch in dicken Schichten.

## Patentansprüche

1. Lösungen von polyimidbildenden Substanzen, enthaltend
A) aromatische oder teilaromatische Diamine und
B) Tetraester von imidbildenden aromatischen oder teilaromatischen Tetracarbonsäuren oder Gemischen dieser Tetraester mit den entsprechenden Tri-, Di- und/oder Monoestern, wobei die Gemische aus Tetra- und Diestern bis zu 80 mol-% Diester enthalten können.

2. Verwendung von Lösungen gemäß Anspruch 1 zur Herstellung von Überzügen.

3. Mit einem Polyimid beschichteter Gegenstand, erhältlich unter Verwendung einer Lösung gemäß Anspruch 1 als Beschichtungsmittel.

## Claims

1. A solution of a polyimide-forming substance, containing
A) an aromatic or partly aromatic diamine and
B) a tetraester of an imide-forming aromatic or partly aromatic tetracarboxylic acid or a mixture of this tetraester with the corresponding tri-, di- or monoester, it being possible for the mixture of the tetraester and the diester to contain up to 80 mol % of diester.

2. Use of a solution as claimed in claim 1 for the production of coatings.

3. An article coated with a polyimide and obtainable using a solution as claimed in claim 1 as a coating material.

## Revendications

1. Solutions de substances formant des polyimides, contenant
A) des diamines aromatiques ou partiellement aromatiques et
B) des tétraesters d'acides tétracarboxyliques aromatiques ou partiellement aromatiques formant des imides ou des mélanges de ces tétraesters avec les tri-, di- et/ou monoesters correspondants, tandis que les mélanges de tétra- et diesters peuvent contenir jusqu'à 80 % en mol de diester.

2. Utilisation de solutions selon la revendication 1 pour la préparation de revêtements.

3. Objet enduit avec un polyimide, pouvant être obtenu par utilisation d'une solution selon la revendication 1 en tant que moyen d'enduction.
